# EUROPEAN PATENT APPLICATION

(11) **EP 1 577 549 A1**
(43) Date of publication of application: **21.09.2005**
(21) Application number: 04405157.1
(22) Date of filing: 16.03.2004
(51) Int. Cl.: F03D 9/02, F02C 6/14, F02C 7/10, F03D 9/00, F22B 1/04

(54) **Apparatus for storing thermal energy and generating electricity**

(71) Applicant: ABB RESEARCH LTD., 8050 Zürich (CH)
(72) Inventor: Ohler, Christian, 5400 Baden (CH); Chartouni, Daniel, 5400 Baden (CH); Lakner, Martin, 5413 Birmenstorf (CH)
(74) Representative: ABB Patent Attorneys

(57) **Abstract**

Because the efficiency of the thermal energy storage technology is inherently restricted, its beneficial use is limited to very particular economic boundary conditions, namely a large difference between the value of electricity going *into* the unit and the value of electricity coming *out* of the unit. With the reduction in wind power equipment prices and the cost of fossil fuels and/or their combustion products this is the case for wind power. Wind is a free fuel and the value of wind power when there is too little load demand is essentially zero, and the value of wind power when there is demand is considerable indeed. Under these circumstances, electrothermal energy storage in a solid heat storage medium provides for a cost efficient system for storing energy and an economical way of generating electricity therefrom.

## Description

### FIELD OF THE INVENTION

The invention relates to the field of energy storage and generation of electricity. It departs from a system for storing thermal energy as described in the preamble of claim 1.

### BACKGROUND OF THE INVENTION

Important renewable energy sources for generating electricity are intermittent by nature. Wind blows or does not, the sun shines or does not. If electric power generation from such intermittent energy sources has to be continuous, an energy storage unit is required where energy is stored during periods of abundant supply and retrieved from as electricity demand exceeds supply. Furthermore, if periods of insufficient supply last very long, an energy storage unit of formidable size might be required to sustain power during these periods, in consequence, such power generation systems are often complemented with conventional power generation from fossil fuels which can be easily stored in large quantity.

As a first example, power generation systems for island grids of up to 100 kW interconnecting a few remote households comprise a small wind turbine, large quantities of batteries and backup diesel generators. As a second example, solar-thermal power plants convert solar radiation into heat which is transferred by a thermal fluid to a thermodynamic machine such as a steam turbine to generate electricity. In order to extend the operational time of such plants, the thermal fluid may also transfer heat to a heat storage unit. This heat is later retrieved from the heat storage unit. Furthermore, steam generation may be augmented by combustion of fossil fuel to further extend the operational time of such plants and render them completely independent of weather conditions.

The beneficial use of energy storage is, however, not limited to the case of electricity generation from wind or sun. In large interconnected power grids, electricity is abundant and cheap during the night when baseload power plants such as nuclear power plants continue to supply at full capacity while the demand for electricity is low. During a few hours of the day electricity demand and prices peak, and peak load power plants operate. Albeit on a different time scale, this situation is somewhat similar to the case of abundant and lacking wind power.

Hydrostorage power plants store electricity during periods of abundance and supply electricity during peak hours. Hydrostorage is the most developed large scale electric energy storage technology, but it is limited to few suitable geographic locations and large plant sizes.

Against natural engineering intuition, so-called electrothermal energy storage as a complement to intermittently available energy sources and/or periodically peaking energy demands is well worth of being considered. Electrothermal energy storage generally comprises the steps of converting electricity to heat, storing the heat, and converting the heat back to electricity. While electrothermal energy storage seems to lack technical elegance, it is remarkable from an economic point of view, as it has a peculiar cost structure compared to other electrical energy storage technologies. Heat is stored relatively easily and as a consequence, electrothermal energy storage has low cost per kWh ("energy capacity cost"). It has also moderate cost per kW ("conversion cost" or "power cost"). As the conversion of electricity to heat and vice versa is purely of a physical kind without any (electro-)chemical conversion involved, a long cycle life for a storage device based thereupon can be expected. Unlike hydrostorage, it is location independent and relatively compact, i.e. has a high energy density. In addition, electrothermal energy storage generally follows favourable scaling laws for up scaling to larger power and capacity levels.

Despite of the abovementioned advantages, electrothermal energy storage is yet no option for most applications, as the advantages are outweighed by the poor round-trip efficiency (from electrical back to electrical). However, electrothermal energy storage is indeed an option for the storage of electrical energy if a large capacity is needed and if the primary source of power is inexpensive relative to the energy storage device. The latter is the case in particular for natural renewable energy sources and their basically free "fuels" solar and wind power or for inexpensive base load electricity during periods of low demand. Beyond a certain hydrocarbon fuel price level (for example reflecting a remote geographic location with high diesel transport costs or a carbon dioxide tax), electrothermal energy storage is for example the right complement to wind power generation.

In the patent US 3'080'706 a heat storage operated Stirling cycle engine is shown, wherein an engine is operated solely by heat stored in an associated container. The heat is supplied to a heat storage substance in the container by a heater coil with a disconnectable coupling. The heat storage substance (e.g. lithium hydride, lithium hydroxide and lithium fluoride) has a very high heat of fusion and a melting point which is within the operating temperature range of the engine.

The patent US 5'384'489 discloses a wind-powered electricity generating system including a wind energy storage and recovery device for remote locations off the utility grid. During periods of abundant wind power, electricity from a wind powered electricity generator operates a resistance heater immersed in a thermal fluid. The latter is circulated in a circuit by pumps arranged between the heater and a storage container and necessitates a fluid-tight sealing of said circuit and container. During periods of low wind speed or high demand, the heat from the heated thermal fluid in the storage device is converted back to electricity by an energy extractor or heat exchanger creating steam for a steam powered electricity generator. At the expense of increasing the total system investment cost, a back-up fossil fuel internal combustion diesel engine may be added as a precaution.

### DESCRIPTION OF THE INVENTION

It is therefore an objective of the invention to equilibrate a time dependent discrepancy between an electricity demand and supply without the help of a fluid-tight container. This objective is achieved by a system for storing energy according to claim 1. Further preferred embodiments are evident from the dependent patent claims.

According to the invention, a source of electrical power supplies electricity to an electrical resistor inside a thermal storage device. The heat generated in the resistor is stored in a heat storage medium that remains in a solid state over the entire operating temperature range of the heat storage device, i.e. during the complete process of supplying and extracting heat. This facilitates the design of the heat storage device, as no fluid-tight container has to be provided. In addition, the volume change incurred by the phase change to the liquid phase during heating in storage systems based on latent melting heat do not have to be taken into account, and the chemical reactivity of molten salts or metals that tend to be chemically aggressive and necessitate a corrosion protection of the container material as well as stratification processes occurring in any liquid phase after several cycles can be disregarded. The heat from the storage device is occasionally retrieved, via first heat transfer means, from the device and provided to a thermodynamic machine for generating electricity such as a thermal machine in expansion mode, i.e. a turbine, or a reciprocating engine, e.g. a Stirling engine, and thus helping to balance or equilibrate a time dependent discrepancy between an electricity demand and supply.

Preferably, the heat storage medium comprises a refractory material such as magnesia or alumina in the form of bricks or as a castable refractory or a combination of both. These components are already in long term industrial use in high temperature furnace applications, in the steal or the glass industry, and can stand temperatures of up to 1500°C and store a large amount of heat in a relatively small volume.

Preferably, the source of electrical power is an intermittent energy source, and in particular an intermittent renewable energy source such as wind power or solar radiation, or an abundant and relatively low cost electricity from the power grid during hours of low demand. Thus a more continuous electricity supply from intermittent energy sources or a more schedulable electricity supply from baseload power plants is possible.

If the thermal energy retrieved from the storage device is insufficient to meet the electricity demand, it is complemented by heat from a second heat generating means. The latter provides thermal energy to the very same thermodynamic engine as said first heat transfer means, hence there is no need to provide a separate set of back-up power generation equipment, and a doubling of the essential components is avoided.

In a further preferred embodiment, the second heat generating means include a second working fluid circulating in a second working fluid circuit connected to the thermodynamic machine and a controllable heat source such as a simple fuel burner or a geothermal energy source that can be switched on and off for heating the second working fluid. Thus the thermodynamic machine is either operated by the heat stored in the thermal storage unit (originating from the source of intermittent electrical power) or the heat from a combustion of (fossil or biomass) fuels or by a combination of both.

In an even more refined embodiment, the thermodynamic machine is connected to only one fluid circuit comprising one working fluid, i.e. a working fluid from the first heat transfer means and the second working fluid are not distinct, but coincide. This avoids the provision of some kind of switch for guiding either one of two distinct working fluids to the thermodynamic engine, and permits to maintain a constant upper working fluid temperature for the thermodynamic machine even when the thermal storage unit is at a lower temperature.

In another preferred embodiment a controllable heat resistance is provided for controlling the amount of heat transferred to the first working fluid. This allows to increase the upper storage temperature limit of the heat storage device above the upper working temperature of the thermodynamic machine. As a matter of fact, the upper working temperature of steam operated thermodynamic machines is limited to about 600-700°C because of those parts of the machine that are in contact with the hot pressurized steam during an extended lifetime. Consequently, if the heat exchanger that extracts and transfers heat to the turbine is arranged inside the heat storage device, the latter has an upper storage temperature limited to 600-700°C. On the other hand, it is desirable to permit higher temperatures of the heat storage unit in order to increase its energy density. In addition, a high upper working temperature for the steam engine in order to realize a decent Carnot efficiency can be maintained even if the storage temperature decreases over time, provided the latter is still above the former.

Preferably, the variable heat resistance is achieved through a transfer circuit coupled to and arranged between the heat storage device and the first working fluid circuit, and controlling the convective heat transfer in this transfer circuit. The latter is done e.g. by regulating the flow speed via a valve or a pump of a liquid metal (lead, sodium or silver) used as a transfer or auxiliary fluid. The temperature difference between the heat storage medium and the upper or optimum temperature of the working medium of the thermodynamic machine thus can be adapted to maximize both the heat content of the storage device and the efficiency of the conversion of heat to electricity.

### BRIEF DESCRIPTION OF THE DRAWINGS

The subject matter of the invention will be explained in more detail in the following text with reference to preferred exemplary embodiments that are illustrated in the attached schematical drawings, in which:
Fig.1 shows a system for storing energy,
Fig.2 shows the system with a controllable heat transfer resistance.

The reference symbols used in the drawings, and their meanings, are listed in summary form in the list of reference symbols. In principle, identical parts are provided with the same reference symbols in the figures.

### DETAILED DESCRIPTION OF PREFERRED EMBODIMENTS

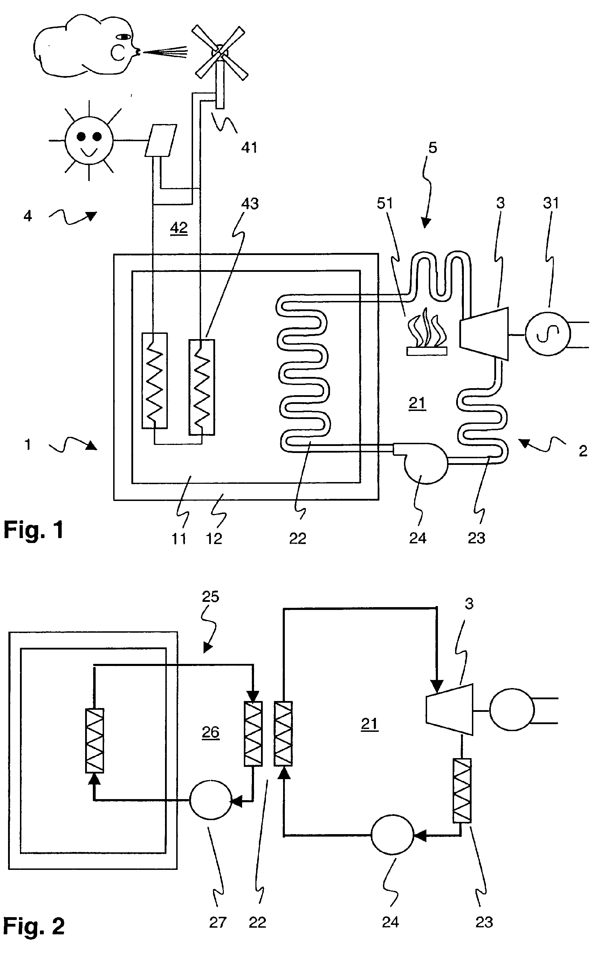

Fig. 1 shows the main components of a system for generating electricity based on the inventive system for providing thermal energy to a thermodynamic machine. The heat storage device or thermal storage unit 1 includes a solid thermal storage material 11 surrounded by an adequate heat insulation system 12 and is thermally coupled to a first working fluid circuit 21 via a heat exchanger 22. The first circuit 21 comprises a first working fluid circulating in an adequate tubing arrangement between the heat exchanger 22 and a thermodynamic machine 3 such as a steam turbine or a sterling engine mechanically coupled to a generator 31. A controllable heat source or fuel burner 51 is provided in the first circuit 21 to heat the first working fluid if necessary. The circuit 21 further comprises a condenser 23 and a pump 24 for supporting the circulation of the first fluid. As the controllable heat source 23 is part of the first working fluid circuit 21, no separate second working fluid circuit is depicted. A wind powered electricity generator 41 converts wind into electrical energy that is transferred via a first electrical circuit 42 comprising resistors 43 to the heat storage device 1. The thermal storage material 11 is comprised entirely within the thermal insulation 12 that is not necessarily the case for a thermal fluid flowing between a storage vessel and a heat exchanger.

The heat in the heat storage device 1 is preferably generated from renewable and intermittent energy sources. For instance, solar energy can be converted to electrical energy in photovoltaic cells, or wind energy, the most promising and most unpredictable renewable source of energy, is converted into mechanical energy in a wind turbine coupled to a generator 41.

The conversion of electricity to heat is done via resistors 43 distributed throughout the heat storage unit 1. These resistors need to be in good thermal contact to the surrounding heat storage medium 11 so that they can transfer the heating power to that medium. Possibly, the resistors could be simple steal ribbons buried between an appropriate solid refractory castable. The lower the heat resistance to the bulk of the heat storage medium, the lower is the tendency of the resistors to overheat. The thermal expansion coefficients of the resistor material and the heat storage medium need to be approximately matched or the design must accommodate the difference in thermal expansion. The supply voltage is a compromise between two contradicting requirements. On one hand, the resistors will overheat less if they are widely spread throughout the heat storage medium. Taking into account reliability, this favours a *low* supply voltage, namely many resistors connected electrically in parallel; on the other hand, the electrical power supply is a heat leakage path which cuts through the heat insulation, having in mind the relationship between electrical and thermal conductivity in metals (Wiedemann-Franz law), this would favour a *high* supply voltage, i.e. low currents.

The storage of the heat is either in sensible form in a solid refractory or in latent form (in the melting energy) of a salt or a metal. The heat storage material preferably has the following properties: high density, high heat conductivity, chemical stability and compatibility at the working temperatures. In addition, a high specific heat capacity over the relevant temperature range for sensible heat storage or a high specific melting energy and appropriate melting temperature for latent heat storage are required. Typical values are listed in the following table:

| Material | Density | Heat Capacity | Heat Cond. | Melting Temp. | Latent Heat | Max. Temp. | Useful Volumetric Heat Density (400-800 °C) |
|---|---|---|---|---|---|---|---|
| Magnesia refractory bricks | 3.0 g/cm³ | 1.1-1.2 JK⁻¹g⁻¹ (600 °C) | 3.5 - 6.5 WK⁻¹m⁻¹ (600 °C) | | | 1500 °C | 370 Wh 1⁻¹ (400-800 °C) |
| Alumina refractory bricks | 2.7 g/cm³ | 0.9-1.1 JK⁻¹g⁻¹ (600 °C) | 2.1 WK⁻¹m⁻¹ (600 °C) | | | 1500 °C | 300 Wh 1⁻¹ (400-800 °C) |
| Sodium Chloride | 2.2 g/cm³ | 0.85 JK⁻¹g⁻¹ | 7.0 WK⁻¹m⁻¹ | 802 °C | 520 Jg⁻¹ | | 350 Wh 1⁻¹ (400-810 °C incl. melting) |

Heat is collected from the thermal storage unit with heat exchanger tubes or pipes distributed throughout the thermal storage unit and arranged to minimize the temperature drop to the heat storage material. Because in wind energy storage, the rate for charging (i.e. heating) is usually considerably higher than the rate for discharging, the arrangement of said heat collecting tubes is less critical than the distribution of the heat generating resistors.

State of the art large coal-fired steam power plants operate at conversion efficiencies of 41-45% from the chemical energy content of the coal to electricity. The upper working temperature of the Rankine cycle is today limited to ca. 650 °C because the aggressive steam under high pressure limits the lifetime of the steal tubes in the steam generator (the heat exchanger to the combustion chamber). In consequence, a steam turbine fed from a thermal storage unit hotter than 650 °C would need an additional controllable heat transfer between the main thermal storage unit and the steam generator. This complicates the design by introducing two more heat exchangers. On the other hand, such a design permits higher upper temperatures for the heat storage unit and thereby decreases the cost.

In Fig.2, a corresponding system with a controllable heat resistance (25) as part of the first heat transfer means (2) is shown. The heat resistance (25) comprises a transfer circuit (26) with a transfer fluid and a flow speed regulator or a pump (27) for the transfer fluid. The latter is e.g. a liquid metal, which passes its thermal energy on to the first working fluid, e.g. steam, via heat exchanger 22. The heat transfer is regulated by the flow speed regulator (27) such that the temperature of the first working fluid is equal to the optimum working temperature of the thermodynamic machine (3) for as long as possible.

Because the efficiency of the thermal energy storage technology is inherently restricted, its beneficial use is limited to very particular economic boundary conditions, namely a large difference between the value of electricity going *into* the unit and the value of electricity coming *out* of the unit. With the reduction in wind power equipment prices and the cost of fossil fuels and/or their combustion products this is the case for wind power. Wind is a free fuel and the value of wind power when there is too little load demand is essentially zero, and the value of wind power when there is demand is considerable indeed. Under these circumstances, a combination of electrothermal energy storage and combustion of (fossil) fuels provides for a cost efficient system for storing energy and an economical way of generating electricity.

### In the following, a practical embodiment of the invention is given:

It is assumed that the magnesia refractory uses the temperature range between 400 °C and 800 °C. The storage unit is "empty" at 400 °C and "fully charged" at 800 °C. The upper temperature is defined by the upper working temperature of the heat exchanger tubes used to extract the heat. The minimum temperature is defined as the lowest reasonable working temperature of a state-of-the art Stirling engine. In consequence, the part of the heat contained below the lower temperature is not used.

State-of-the art Stirling engines are known to achieve 65-70% of the Carnot efficiency for conversion of heat to work. With the Carnot efficiency, η_{Carnot} = 1 - T_{Low} / T_{High}, this would mean at least 65% x 73% = 48% at a temperature of 800 °C (when the thermal storage unit fully charged) and 65% x 57% = 37% at 400 °C (when the thermal storage unit is discharged to the practical limit), assuming T_{Low} 15 °C. The weighted average would be 43%.

In order to store 12'000 kWh of thermal energy between 400 and 800 °C, one needs 32.8 m³ or a cube of 3.2 meter side length. This corresponds to a gross effective thermal energy density (between 400 °C and 800 °C) of 370 Wh per litre and 122 Wh per kg. (Due to the heat insulation, see below, the net effective energy density is smaller. For the example system, a quick calculation gives a 55 cm thick heat insulation wall. This makes the three meter cube of the heat storage material a 4.4 meter cube in total, it adds as much as 44 m³ to the 33 m³ "active" material. Assuming realistic temperature dependent heat conductivity properties of this heat insulation system, the storage unit would lose 5.1 kW thermal power continuously (at 800 °C) through the heat insulation. This corresponds to a 1.0% self discharge per day. (The heat leaking through the electrical supply to the resistors is only ca. 540 W even at the low supply voltage assumed above.) Assuming a heat transfer coefficient of 1000 W/(m²K), which seems conservative e.g. for a steam generator or the working gas of a Stirling engine, and permitting 10°C temperature difference from the tube to the fluid means that the heat exchanger needs a surface area of 25 m², it could tentatively be realized with 63 pipes of 4 cm in diameter and 3.20 m length (connected partially in series and in parallel).

### LIST OF DESIGNATIOINS

- 1: heat storage device
- 11: thermal storage material
- 12: heat insulation system
- 2: first heat transfer means
- 21: first working fluid circuit
- 22: heat exchanger
- 23: condenser
- 24: pump
- 25: controllable heat resistance
- 26: transfer circuit
- 27: flow speed regulator
- 3: thermodynamic machine
- 31: heat powered electricity generator
- 4: first heat generating means
- 41: wind powered electricity generator
- 42: first electrical circuit
- 43: resistors
- 5: Second heat generating means
- 51: controllable heat source

## Claims

1. A system for storing thermal energy, comprising
- a heat storage device (1) with a heat storage medium (11) operating between a lower and a higher temperature level,
- a first heat generating means (4) comprising an electrical resistor (43) inside the heat storage device (1) for heating the heat storage medium (11) with electrical power,
- a first heat transfer means (2) for transferring thermal energy from the heat storage device (1) to a thermodynamic machine (3) for generating electricity,
**characterized in that** the heat storage medium (11) is in a solid state at both the lower and higher temperature level.

2. The system according to claim 1, **characterized in that** the heat storage medium (11) comprises refractory bricks and/or refractory castable.

3. The system according to claim 1, **characterised in that** it comprises an intermittent renewable energy source such as wind power, or low-cost baseload electricity from a power grid, as a source of electrical power for the first heat generating means (4).

4. The system according to claim 1, **characterized in that** it comprises second heat generating means (5) for providing thermal energy to the thermodynamic machine (3).

5. The system according to claim 4, **characterized in that** the second heat generating means comprise a second working fluid circuit with a second working fluid connectable to the thermodynamic machine (3), and a controllable heat source (51) for heating the second working fluid.

6. The system according to claim 5, wherein the first heat transfer means (2) comprise a first working fluid circuit (21) with a first working fluid connectable to the thermodynamic machine (3), **characterized in that** the second working fluid circuit and the first working fluid circuit (21) are identical.

7. The system according to claim 1, **characterized in that** the first heat transfer means (2) comprises a controllable heat resistance (25) for controlling the heat transfer.

8. The system according to claim 7, **characterized in that** the controllable heat resistance (25) comprises a transfer circuit (26) with a transfer fluid and a flow speed regulator (27) for the transfer fluid.
